# EUROPEAN PATENT APPLICATION

(11) **EP 4 190 833 A1**
(43) Date of publication of application: **07.06.2023**
(21) Application number: 21306712.7
(22) Date of filing: 06.12.2021
(51) Int. Cl.: C08G 18/08, C09D 11/00, C09D 175/04, C09J 175/04

(54) **AQUEOUS COATING COMPOSITIONS, USES THEREOF AND PROCESSES FOR PREPARING THE SAME**

(71) Applicant: Bostik SA, 92700 Colombes (FR)
(72) Inventor: LI, Yong, Shanghai, 201108 (CN)
(74) Representative: Arkema Patent

(57) **Abstract**

Disclosed herein is an aqueous coating composition comprising a mixture of an aqueous polyurethane dispersion (A) and a thickener (C), wherein the thickener (C) comprises at least one water-in-oil inverted emulsion. Also disclosed is a process for preparing the aqueous coating composition, a coating film formed by the aqueous coating composition, and uses of the aqueous coating composition in preparation of or as coatings, adhesives, sealants, inks, paints and building products.

## Description

### FIELD OF THE INVENTION

The present invention relates to aqueous coating compositions, uses of the inventive aqueous coating composition in preparing or as coatings, adhesives, sealants, inks, paints and building products, coating films formed thereof, articles comprising a substrate and at least one of the coating film, as well as processes for preparing an aqueous coating composition.

### BACKGROUND OF THE INVENTION

Low gloss coatings have been attracting increasing interest in recent years. Many consumers have a preference for more natural look instead of a glossy surface. Low gloss coatings are aesthetically desirable in various markets such as automotive, consumer electronics and construction industries.

Attempts have been made to produce low gloss coatings. Low gloss coatings can be prepared by adding matting agents, which are typically fine particle powders of organic and/or inorganic materials, such as silica. However, addition of such matting agent can adversely impact the viscosity of the coating composition, rendering it difficult to use. And it may also affect mechanical and chemical properties of the resulting coating. Other methods to produce low gloss coating films include using crosslinkable resins, or a mixture of slightly incompatible polymers. The second method may have increased cost of raw materials as it uses resins with special designed functional groups, and it may not produce a low gloss coating having desired coating properties, such as hardness, scratch resistance, adhesion.

Storage stability is an important property of an aqueous coating composition. Factors, such as storage time, exposure to extreme cold or hot temperatures, can have big effects on the chemical and physical properties of an aqueous coating composition. For example, for aqueous coating compositions with insufficient storage stability, phase separation, sedimentation, or significant viscosity change may occur during storage or transportation. After a long storage time, an aqueous coating composition may form a coating film having a gloss which is different with the gloss of a film formed when they are originally manufactured. To obtain an excellent storage stability, it is necessary to ensure a good compatibility of the different constituents of the aqueous composition. The above mentioned low gloss coating composition with matting agents usually have a poor storage stability (especially high temperature storage stability above 40°C) due to the addition of a large amount of particle components.

Thus, a need exists for a novel aqueous storage-stable composition which can solve at least partially one or several of the above-mentioned drawbacks.

More particularly, there is a need for aqueous storage-stable composition which can form a low gloss coating film when applied on a substrate.

### SUMMARY OF THE INVENTION

The present invention is directed to an aqueous coating composition comprising a mixture of an aqueous polyurethane dispersion (PUD) (A) and a thickener (C), wherein the thickener (C) comprises at least one water-in-oil (w/o) inverted emulsion.

In some embodiments, the aqueous coating composition comprises a mixture of, with respect to the total weight of the mixture:
30-99.9wt% of the aqueous PUD (A);
0-69.9wt% of a vinyl-based emulsion (B);
0.1-5wt% of the thickener (C); and
0-5wt% of an additive(s) (D).

The aqueous PUD (A) may have a solid content of 45-55wt%. The aqueous PUD (A) may comprise polyurethane-based particles having a D50 particle size of 50-500 nm, preferably 60-400 nm.

The vinyl-based emulsion (B) may have a solid content of 45-65wt%. The vinyl-based emulsion (B) may comprise vinyl-based copolymer particles having a D50 particle size of 500-1200 nm, preferably 600-1000 nm.

In some embodiments, the vinyl-based copolymer emulsion (B) comprises a copolymer of vinyl acetate and ethylene. In a preferred embodiment, the vinyl-based copolymer emulsion (B) consists of a vinyl acetate-ethylene (VAE) copolymer emulsion.

In some embodiments, the water-in-oil inverted emulsion comprised in the thickener (C) is a hydrophobically alkali swellable emulsion (HASE) comprising at least one anionic acrylic copolymer. In a specific embodiment, the water-in-oil inverted emulsion comprises an acrylic copolymer and an acrylamide. In some embodiments, the water-in-oil inverted emulsion comprises a continuous phase comprising at least one non-polar organic solvent.

In some embodiments, the thickener (C) further comprises at least one oil-in-water emulsion.

In some embodiments, the aqueous coating composition is substantially free of a matting agent.

In some embodiments, the aqueous coating composition has a 10s recovery viscosity of no less than 30 Pa·s, preferably, in a range of 30-200 Pa·s, and more preferably, in a range of 30-120 Pa·s, the 10s recovery viscosity being a viscosity value after ten seconds of a third step when the aqueous coating composition is subjected to a three-step shear recovery test at 25°C with shear rates of 0.1 s⁻¹, 1000 s⁻¹ and 0.1 s⁻¹ for each step respectively.

In some embodiments, the aqueous coating composition has a Brookfield viscosity change of less than 20% after being stored at 50°C for 30 days.

In some embodiments, the aqueous coating composition can form a coating film having a 60°gloss of less than 40, preferably less than 35, more preferably in a range of 5-30, the 60° gloss being measured according to ASTM D-523.

The invention also relates to coating films formed by the aqueous coating composition of the present invention. The coating films may have low gloss.

The invention further relates to the uses of said inventive compositions in preparation of or as coatings, adhesives, sealants, inks, paints and building products. A water-based adhesive composition comprising the aqueous coating composition of the present invention is included.

The present invention further relates to an article comprising a substrate and a coating film formed by the aqueous coating composition of the present invention.

The present invention also provides a process for preparing an aqueous coating composition and the aqueous coating composition prepared by the process.

In some embodiments, the process for preparing the aqueous coating composition comprises the steps of: (i) providing an aqueous PUD (A); and (ii) introducing a thickener (C) into the aqueous PUD (A) under stirring. The thickener (C) comprises at least one water-in-oil inverted emulsion.

In some embodiments, the process for preparing the aqueous coating composition comprises the steps of: (i) mixing an aqueous PUD (A) and a vinyl-based emulsion (B) to obtain a polymer dispersion; and (ii) introducing a thickener (C) into the polymer dispersion still under stirring. The thickener (C) comprises at least one water-in-oil inverted emulsion.

The present invention provides an eco-friendly solution for forming a low gloss coating film as the inventive coating composition is water-based. It addresses the problems of conventional aqueous coating composition having unsatisfactory storage stability by formulating the aqueous coating composition with an aqueous PUD (A), an optional vinyl-based copolymer emulsion (B), a thickener (C) comprising at least one water-in-oil inverted emulsion, and an optional additive(s) (D). The presence of the at least one water-in-oil inverted emulsion is critical to ensure good storage stability of the aqueous coating composition and desired gloss of the coating film formed thereof. The aqueous coating compositions and low gloss coating films disclosed herein can be used in various applications, such as consumer electronics, automotive and construction industries.

### BRIEF DESCRIPTION OF THE DRAWINGS

The present invention will become more fully understood from the detailed description and the accompanying drawings, wherein:

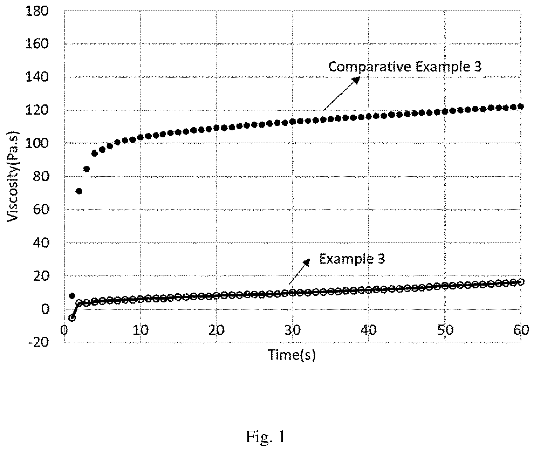

Fig. 1 shows rheological profiles in the third step of the three-step shear recovery test for the samples prepared in Example 3 and Comparative Example 3.

### DETAILED DESCRIPTION OF THE INVENTION

For purposes of the following detailed description, it is to be understood that the invention may assume various alternative variations and step sequences, except where expressly specified to the contrary. Moreover, other than in any operating examples, or where otherwise indicated, all numbers expressing, for example, moieties in a general chemical formula and quantities of ingredients used in the specification and claims are to be understood as being modified in all instances by the term "about". Accordingly, unless indicated to the contrary, the numerical parameters set forth in the following specification and attached claims are approximations that may vary depending upon the desired properties sought to be obtained by the present invention. Each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" or "1-10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances.

The term "solid content" used in the present application refers to the content of nonvolatile matter or dry matter in a liquid composition (e.g., emulsion, dispersion, coating composition), expressed as weight percentages (wt%). The solid content is measured according to DIN EN ISO 3251.

In this application, the term "D50 particle size" means the cumulative volume-average particle size which is defined as the particle diameter where half of the volume distribution resides above this point, and half resides below this point. The D50 particle size is measured by a laser diffraction particle size analyzer according to DIN ISO 9276. For dispersions or emulsions, the D50 particle size is tested using a wet method.

In the present invention, "storage stability" is understood to mean the property of an aqueous coating composition to be capable of storage at a specific temperature for a predetermined period without demixing and that after storage, a coating film can be produced, which in comparison with a coating film formed directly after production of the composition, exhibit similar chemical and mechanical properties. In the present invention, two conditions are used to test the storage stability of a coating composition:
room temperature (RT) storage stability: 25°C, 30 days;
high temperature (HT) storage stability: 50°C, 30 days,
and if after 30 days the viscosity change comparing with initial viscosity was less than 20%, the coating composition is considered to be storage stable. It is desired to produce an aqueous coating composition having both good RT storage stability and good HT storage stability. For coating compositions that will be stored or transported in a closed space (e.g., containers) with a higher temperature, it is important to impart good HT storage stability to the composition to ensure good quality and performance when it is in use. There is a technical barrier to achieve good HT storage stability for most aqueous coating compositions.

In the present application, "coating" (when used as a noun), "coating film" or "coating layer" refers to a thin layer of a substance covering a surface. It is formed by applying a coating composition onto a surface of a substrate, and drying or curing the coating composition to form a coating film. The drying or curing conditions (including temperature, time, etc.) for different coating compositions may be different. The coating film can be a dry film with desired hardness, or it can be adhesive with desired adhesiveness. When a coating composition can form an adhesive coating, it is an adhesive.

As used in the present application, "low gloss" or "low surface gloss" refers to a coating film having a surface with a reflectance of less than 40, preferably less than 35, more preferably less than 30 when measured at 60° angle of incidence under ASTM D-523 test with a 3nh gloss meter, YG 268.

The first aspect of the present invention is directed to aqueous coating compositions. The aqueous coating composition comprises a mixture of an aqueous PUD (A) and a thickener (C), wherein the thickener (C) comprises at least one water-in-oil (w/o) inverted emulsion.

In some embodiments, the aqueous coating composition comprises a mixture of, with respect to the total weight of the mixture:
30-99.9wt%, preferably 30-90wt%, more preferably 30-80wt% of the aqueous PUD (A);
0-69.9wt%, preferably 10-69.9wt%, more preferably 20-69.9wt% of a vinyl-based emulsion (B);
0.1-5wt%, preferably 0.1-4wt%, more preferably 0.1-3wt% of the thickener (C); and
0-5wt%, preferably 0-4wt%, more preferably 0.01-3wt% of an optional additive(s) (D).

In some embodiments, the aqueous PUD (A) comprises polyurethane-based particles.

The polyurethanes may be obtained by a reaction of polyisocyanates, polymeric polyols and other optional monomers. According to a preferred embodiment, the aqueous PUD (A) comprises an anionic aliphatic polyurethanes. In some other embodiments, the aqueous PUD (A) comprises a self-crosslinkable polyurethane, which means, it may undergo a self-crosslinking reaction and cure when dried or activated by heating. The aqueous PUD (A) can be prepared or directly purchased from suppliers on the market, such as Dispercoll^{®} available from Covestro and ADWEL^{®} available from Wanhua.

The aqueous PUD (A) may have a solid content of 45-55 wt%, preferably in a range of from 48wt% to 52 wt% measured according to DIN EN ISO 3251. The aqueous PUD (A) used herein may comprise polyurethane-based particles having a D50 particle size of 50-500 nm, preferably 60-400 nm, as determined in accordance with DIN ISO 9276. The aqueous PUD (A) may have a Brookfield viscosity ranging from 30 to 1000 mPa·s, preferably ranging from 40 to 700 mPa·s, when measured at 25°C according to DIN EN ISO 2555.

In some embodiments, the aqueous coating composition may optionally comprise a vinyl-based copolymer emulsion (B). The combination use of the aqueous PUD (A) and the vinyl-based copolymer emulsion (B) may achieve improved properties for the coating films formed from the aqueous coating composition, and may also lead to a lower cost.

In some embodiments, the vinyl-based copolymer present in the emulsion (B) is prepared by a vinyl monomer and a copolymerizable monomer selected from the group consisting of vinyl acetate, vinyl chloride, vinylidene chloride, styrene, alkyl acrylate, and combinations thereof. In a preferable embodiment, the vinyl-based copolymer emulsion (B) comprises a copolymer of vinyl acetate and ethylene, i.e., VAE copolymer. The VAE copolymer may be prepared by copolymerization of vinyl acetate and ethylene, with a vinyl acetate content of 60-95 wt%, and an ethylene content of 5-40 wt%, based on the total weight of the monomers. The VAE copolymer may have a glass transition temperature (Tg) less than 10°C measured by Differential Scanning Calorimetry (DSC) with a standard method well known to a person skilled in the art. In a preferred embodiment, the vinyl-based copolymer emulsion (B) consists of a VAE copolymer emulsion.

The vinyl-based copolymer emulsion (B) may have a solid content ranging from 45 to 65 wt% measured according to DIN EN ISO 3251. The vinyl-based copolymer emulsion (B) may comprise vinyl-based copolymer particles having a D50 particle size of 500-1200 nm, preferably 600-1000 nm, as determined in accordance with DIN ISO 9276. The vinyl-based copolymer emulsion (B) may have a Brookfield viscosity ranging from 5,000 to 10,000 mPa·s as measured at 25°C according to DIN EN ISO 2555.

As used in the application, "thickener" can also be called "thickening agent" or "rheology modifier", being a substance which can thicken or enhance the viscosity of a composition in which it is included. Besides increasing viscosity of the composition, usually a thickener can also improve the rheology properties of the composition and stabilize the dispersion of insoluble components. Therefore it is important to select suitable thickeners for an aqueous coating composition.

Various polymer types have been proposed for the purpose of increasing the viscosity of coating compositions, and they are classified in several categories according to their chemical structure, physical form and on the mechanism by which they thicken, such as alkali-swellable emulsions (ASE) and hydrophobically modified alkali-swellable emulsions (HASE). An ASE thickener typically is a crosslinked copolymer that is prepared from ethylenically polymerizable monomers including a monomer containing an acid group (e.g., (meth)acrylic acid), a monomer containing a nonionic group (e.g., a non-water soluble lower alkyl ester of (meth)acrylic acid) and an ethylenically polyunsaturated monomer for crosslinking. A HASE thickener is a copolymer typically prepared from a monomer containing an acid group (e.g., (meth)acrylic acid), a monomer containing a nonionic group (e.g., a non-water soluble lower alkyl ester of (meth)acrylic acid) and an associative monomer containing hydrophobic groups (e.g., a hydrophobically modified polyoxyalkylene ester of (meth)acrylic acid). The ASE polymers thicken aqueous systems by a hydrodynamic thickening mechanism. HASE polymers can further form three-dimensional intramolecular and intermolecular hydrophobic networks to produce the desired thickening effect due to their hydrophobic groups.

In the present application, the thickener (C) comprises said at least one w/o inverted emulsion. As used herein, the "water-in-oil (w/o) inverted emulsion", also called "inverse emulsion" or "reverse emulsion", refers to an emulsion containing an oil-based continuous phase and a water-based dispersion phase, i.e., an emulsion of an aqueous phase in an oil or organic phase. Conventional emulsions, in technical terms, most are oil-in-water (o/w) emulsions, i.e., the continuous phase is water. W/o inverted emulsions are simply the opposite, i.e., the continuous phase being an oil. In the present application, the w/o inverted emulsion may be prepared by an inverse or reverse emulsion polymerization, or other method known to the art. In some embodiments, the continuous phase of the w/o inverted emulsion comprises at least one non-polar organic solvent. Examples of the non-polar organic solvent include hydrocarbons, linear or branched, cyclic or acyclic, aliphatic or aromatic, of C10-C20, preferably of C11-C16, obtained from petroleum distillation cuts, such as mineral oil, white oil. The w/o inverted emulsion may comprise any suitable amount of water. Preferably, the w/o inverted emulsion comprises 5-49 wt% of water, more preferably 7.5-45 wt%, even more preferably 10-40 wt%, still more preferably 12.5-30 wt%. Commercially available w/o inverted emulsions include Collacral HP (BASF), Texipol types (Scott-Bader) and TAFIGEL (MUNZING).

In some embodiments, the w/o inverted emulsion used in the present application comprises HASE or it is HASE. When the w/o inverted emulsion is added to an aqueous system, it "inverts" with the help of the water soluble emulsions and water becomes the continuous phase. The hydrophilic polymer particles swell rapidly and the resulting highly swollen structure leads to a rapid increase in viscosity. In some embodiments, the HASE comprises at least one anionic acrylic copolymer. As used herein, "acrylic copolymer" covers copolymers of any acrylic or methacrylic monomers, such as methyl methacrylate, n-butyl acrylate, ethyl hexyl acrylate, n-butyl methacrylate, acrylic acid, methacrylic acid, and the like. In a preferred embodiment, the w/o inverted emulsion comprises a copolymer based on acrylic acid and acrylamide.

In some embodiments, the thickener (C) may further comprises at least one o/w emulsion. In such embodiments, the thickener (C) comprises a combination of w/o inverted emulsion and o/w emulsion. The weight ratio of the w/o inverted emulsion to the o/w emulsion may be in a range of from 99:1 to 30:70, preferably from 99:1 to 40:60, and more preferably from 99:1 to 50:50.

The aqueous coating composition according to the present invention may optionally comprise a certain amount of additive(s) (D) known to be suitable for use in coating formulations, such as fillers, pigments, preservatives, plasticizers, organic solvents, pH adjusting agents, wetting agents, defoamers, or combinations thereof. The total amount of the optional additive(s) (D) will usually be less than 5wt%, based on the total weight of the aqueous coating composition, preferably less than 4wt%, and more preferably in a range of 0.01wt% to 3wt%.

In the aqueous coating composition according to the invention, water is contributed by the aqueous PUD (A), by the vinyl-based copolymer emulsion (B), the thickener (C), by water present in optional additive(s) (D) and by an optional addition of water. In fact, depending on the dilution of the various components, water may be added in order to obtain the desired concentration of active material. According to an embodiment, the water represents from 20-60wt%, preferably 30-55wt%, of the total weight of the aqueous coating composition.

In some embodiments, the aqueous coating composition is substantially free of a matting agent. As used herein, the phrase "substantially free of a matting agent" means that the aqueous coating composition of the present invention is substantially or completely free of conventional matting agents (or flatting agents). The term "matting agent" or "flatting agent" as used herein, refer to fine particle powders of organic and inorganic materials that have a particle size of about 1 to 20 microns and are made of, for example, silica, silicate, polymeric beads, talc, alumina, calcium carbonate, calcium stearate, zinc stearate, aluminum rosinate, and/or clay. As used herein, "substantially free" means that the flatting agent is present in the mixture that is applied to the substrate, if at all, in an amount of less than 1wt%, less than 0.5wt%, less than 0.2wt%, or, in some cases, less than 0.1wt%, based on the total weight of the aqueous coating composition.

The aqueous coating composition of the present invention can be a one-component or a two-component coating composition. In a preferable embodiment, it is a one-component coating composition. As disclosed herein, a two-component (also designated as 2K or two-pack) composition comprises two types of component, resin and a hardener and it cures when the two components are mixed together. The one-component (also designated as 1K or one-pack) coating composition cures by itself through, for example, heat, pressure or moisture in the air.

In some embodiments, the aqueous coating composition may have a solid content in the range from 40 to 60wt% and more particularly in the range from 45 to 55wt%, as measured to DIN EN ISO 3251.

It is surprisingly to be found that the aqueous coating composition of the present invention not only present good RT storage stability (25°C), but also show excellent stability when evaluated at 50°C for 30 days. The storage stability may be mainly attributed to the presence of the at least one w/o inverted emulsion as thickener in the composition. In some embodiments, the aqueous coating composition has a Brookfield viscosity change of less than 20% after storage at 50°C for 30 days.

The aqueous coating composition may have a viscosity suitable for its application. The viscosity of the aqueous coating composition can be controlled by, for example, adjusting the weight percentage of the thickener (C). In some embodiments, the aqueous coating composition of the present application has a Brookfield viscosity of 2,000 to 20,000 mPa·s, preferably from 2,000 to 10,000 mPa·s at 25° C when measured according to DIN EN ISO 2555.

The rheological behavior of the aqueous coating composition can be evaluated by a three-step shear recovery test according to DIN SPEC 91143-2, where the change in viscosity over time is monitored before and after a composition is exposed to a high shear rate. In the first step, the viscosity of the composition at rest with an intact structure is measured, followed by a high shear rate period in the second step to break down the microstructure of the composition. In the third step, the applied shear rate is reduced to the initial value again, to monitor the recovery after a high shear impact. To better evaluate the viscosity recovery behavior of a composition after being exposed to a high shear rate, a "10s recovery viscosity" is defined in the present application, which refers to a viscosity value after ten seconds of the third step when an aqueous coating composition is subjected to the three-step shear recovery test at 25°C with shear rates of 0.1 s⁻¹, 1000 s⁻¹ and 0.1 s⁻¹ for each step respectively. The 10s recovery viscosity can be used to characterize the viscosity recovery speed after being exposed to a high shear rate. Usually when a composition has a high 10s recovery viscosity, it means the composition has a fast viscosity recovery and structure regeneration.

When subjected to the three-step shear recovery test, the aqueous coating composition of the present application behaves as a shear thinning fluid at the second step and shows a rapid recovery to a semi-solid state at the third step. In some embodiments, the aqueous coating composition according to the present application has a 10s recovery viscosity of no less than 30 Pa·s, preferably in a range of 30-200 Pa·s, and more preferably in a range of 30-120 Pa·s. The high viscosity recovery behavior of the aqueous coating composition after being exposed to a high shear rate may be mainly attributed to the presence of the thickener (C) comprising at least one water-in-oil inverted emulsion. It is known to the art that the water-in-oil inverted emulsion can be used as thickening agents in technical fields far from that referred to by the present application, such as cosmetics and pharmacology. The applicant has surprisingly found that in the aqueous coating application, the addition of water-in-oil inverted emulsion can cause a special rheological behavior and further affect the surface roughness of the coating film formed by the aqueous coating composition, which will be discussed in the following description.

The aqueous coating composition according to the present application can be prepared by simply mixing the components or ingredients under stirring.

The present application also provides a process for preparing an aqueous coating composition and the aqueous coating composition prepared by the process. In some embodiments, the aqueous coating composition prepared by the process is the aqueous coating composition of the present invention as described above.

In some embodiment, the process for preparing an aqueous coating composition comprises the steps of: (i) providing an aqueous PUD (A); and (ii) introducing a thickener (C) into the aqueous PUD (A) under stirring. The thickener (C) comprises at least one water-in-oil inverted emulsion.

In some other embodiments, the process for preparing an aqueous coating composition comprising the steps of: (i) mixing an aqueous PUD (A) and a vinyl-based emulsion (B) to obtain a polymer dispersion; and (ii) introducing a thickener (C) into the polymer dispersion still under stirring. The thickener (C) comprises at least one water-in-oil inverted emulsion.

The process for preparing an aqueous coating composition may further comprise a step of introducing at least on additive(s) (D) into the system under stirring. The addition timing of the additive(s) (D) can be determined by common knowledge of people skilled in the art. For example, a defoamer is usually added to the system at the last step.

The aqueous PUD (A), the vinyl-based emulsion (B), the thickener (C) and/or the additive(s) (D) described in the aforementioned aqueous coating composition embodiments can also be used in the embodiments of the process for preparing the aqueous coating composition. To avoid repeated description, they are not reiterated here.

The present application also provides embodiments of coating films formed by the aqueous coating composition of the invention. The coating films show low gloss or matting effects. In some embodiments, the coating film may have a 60° gloss of less than 40, preferably less than 35, more preferably less than 30, and even more preferably in a range from 5 to 30, the 60° gloss being measured according to ASTM D-523.

It is believed, without wishing to be bound by any theoretical mechanism, that the aqueous coating composition can form a low glass coating film because it has a high 10s recovery viscosity, i.e., no less than 30 Pa·s. In the case that the viscosity recovery or structural regeneration is very fast after being exposed to a high shear rate, it is possible that the leveling of the coating may be insufficient, so a coating film with rough surface may be formed.

As disclosed above, it is found that, when the thickener (C) comprising the at least one w/o inverted emulsions is introduced into the aqueous coating composition, the storage stability, in particular the HT storage stability, of the aqueous coating composition is greatly improved, and the formed coating film can show desired low gloss effect. Therefore, an important advantage of the aqueous coating composition of the present invention is that it can form low gloss coating and also keep good properties of the composition including storage stability.

In some embodiments, the coating film of the present invention may be formed by applying the aqueous coating composition on to a surface of a substrate, and drying or curing the aqueous coating composition through, for example, heating or UV radiation. The aqueous coating composition may be applied to the substrate by any suitable method known in the art, such as brushing, dipping, spraying, or roller coating. As an automatic application system, spraying coating is preferable. Spraying has become more and more implemented on industrial sites. The amount of the aqueous coating composition to be applied may vary in the range from 50 to 200 g/m², preferably from 50 to 120 g/m², expressed in wet amount, depending on applications and substrates. The coating film of the present invention may have a same or similar thickness. In some other embodiments, the coating film of the present invention may be uneven.

The aqueous coating composition of the present invention is well suited for variety of substrates, such as plastics (e.g., thermoplastic material), rubber, metal (e.g., steel, aluminum), wood, paper, cardboard, ceramic, and glass, textile, fabric, leather, mineral foundations etc. Examples of the thermoplastic material include high impact polystyrene (HIPS), acrylonitrile-butadiene-styrene (ABS), styrene-acrylonitrile (SAN), polyvinyl chloride (PVC), polycarbonate (PC), high density polyethylene (HDPE), and polyphenylene oxide (PPO). In some other embodiments, the substrate may have a base coat thereon and the coating film of the present invention is formed on the base coat of the substrate to form a topcoat.

In some embodiments of the present invention, the low gloss coating film is essentially transparent. In that case, the color and/or effect properties of the substrate or a base coat layer are visible through the low gloss coating film. In some other embodiments, the coating film can have different color by adding pigments to the aqueous coating composition.

Embodiments of the present invention are also directed to uses and/or applications. The aqueous coating composition of the present invention is suitable for a wide field of applications in the domain of surface coatings, adhesives, sealants, inks, paints and building products. In particular, the aqueous coating composition is suitable for preparing for or use as adhesives and sealants.

In some embodiments, the aqueous coating composition is used as an adhesive. In such embodiments, the aqueous coating composition is a water-based adhesive composition which comprises a mixture of, based on the total weight of the mixture: 30-99.9wt%, preferably 30-90wt%, more preferably 30-80wt% of the aqueous PUD (A); 0-69.9wt%, preferably 10-69.9wt%, more preferably 20-69.9wt% of the vinyl-based emulsion (B); 0.1-5wt%, preferably 0.1-4wt%, more preferably 0.1-3wt% of the thickener (C); and 0-5wt%, preferably 0-4wt%, more preferably 0.01-3wt% of an optional additive(s) (D). The aqueous coating composition can be used to bond two objects together. The object to be bonded may be at least partially made a material of plastics (e.g., thermoplastic material), rubber, metal (e.g., steel, aluminum), wood, paper, cardboard, ceramic, glass, textile, leather, mineral foundations etc., wherein the materials each can be adhered to themselves or to any other material. The water-based adhesive composition of the present invention can be used in various applications including automotive, consumer electronics, and construction industries.

In some embodiments, the water-based adhesive composition is heat activated, and it is called "heat-activatable adhesive". The heat-activatable adhesive may have an activating temperature above 40°C. In some embodiments, the heat-activatable adhesive is suitable to be used as a lamination adhesive of thermoplastic materials. For example, the process of bonding a thermoplastic object and a fabric material using the heat-activatable adhesive can include: (1) applying the heat-activatable adhesive to a surface of the thermoplastic object by spraying; (2) drying the wet coating layer at a temperature of 20-50°C to form a dried coating film on said surface; (3) heating this dried adhesive layer to activate it thermally; and (4) joining the fabric material under pressure onto said surface, resulting in the build-up of a high strength bond that joins the two materials.

While the aqueous coating composition is described herein relative to its use in an adhesive composition, which is not meant to be limiting, as it may be employed in other coating applications.

The embodiments of the present application also provides articles comprising a substrate and a coating film formed by the aqueous coating composition disclosed herein. The article may be formed by applying the aqueous coating composition on at least one part of the surface of the substrate to form a coating film. In some embodiments, the article may comprise two substrates bonded by the coating film. The articles according to the present application may be parts of automotive and consumer electronic products.

### EXAMPLES

The following Examples are presented to demonstrate the general principles of the invention. All amounts listed are described in parts by weight, unless otherwise indicated. The invention should not be considered as limited to the specific Examples presented.

### Testing Methods

RT storage stability. The samples were stored in glass containers equipped with airtight screw caps in a climatic exposure test cabinet at 25°C for 30 days. After storage, the sample was visually inspected firstly and then a Brookfield viscosity was measured at 25°C according to DIN EN ISO 2555. The sample was considered to be storage stable if the viscosity change (increase or decrease) comparing with initial viscosity was less than 20%.

HT storage stability. The same testing method as for RT storage stability was used except that the sample was stored at 50°C for 30 days.

Three-step shear recovery test. It was carried out at 25°C with a TA DHR-2. A shear rate of 0.1 s⁻¹ was applied for 60s in the first step. A shear rate of 1000 s⁻¹ was applied for 60s in the second step. A shear rate of 0.1 s⁻¹ was applied for 60s in the second step. Time-dependent viscosities were recorded based on which a time-dependent viscosity profile was generated for each sample and the 10s recovery viscosity of the third step was recorded.

Gloss. The gloss of coating film was tested with 3nh gloss meter YG 268 according to ASTM D523. ABS is used as a substrate.

### Materials

The materials used were shown in Table 1. There are five emulsions C1-C5 listed in Table 1. C1-C5 itself or a mixture thereof can be used as a thickener (C) in an aqueous coating composition. C1 and C2 were o/w reverted emulsions containing acrylic-based polymers. C3 was a w/o emulsion containing acrylic-based polymers. C4 and C5 were w/o emulsions containing polyurethane-based polymers.

**Table 1.**

| Component | Material | Supplier |
|---|---|---|
| A: PUD | Dispercoll^{®} U 54 (solid content 50wt%) | Covestro |
| B: VAE copolymer emulsion | VINNAPAS^{®} EP645 (solid content 56wt%) | Wacker |
| C1: w/o reverted emulsion | TAFIGEL^{®} AP20 | Munzing |
| C2: w/o reverted emulsion | Texipol 63-510 | Scott-Bader |
| C3: o/w emulsion | TAFIGEL^{®} AP15 | Munzing |
| C4: o/w emulsion | Rheolate 299 | ELEMENTIS |
| C5: o/w emulsion | Coapur XS 83 | Coatex |

### Aqueous coating composition

The aqueous coating composition samples of Examples 1-6 and Comparative Examples 1-4 in Table 2 were prepared by
(i) introducing the PUD (A) in a mixing vessel under stirring ; then
(ii) introducing the VAE copolymer emulsion (B), in said vessel under constant stirring ; then
(iii) introducing the thickener (C) in said vessel, still under stirring, and
(iv) introducing a defoamer into the vessel, still under stirring.

Each of the sample was prepared by the above process with the components shown in Table 2. All the weight percentage values were based on the total amount of the aqueous coating composition to be prepared.

**Table 2.**

| | **PUD (A)** (wt%) | **VAE emulsion (B)** (wt%) | **Thickener (C)** | | **Defoamer** (wt%) |
|---|---|---|---|---|---|
| | | | Thickener | wt% | |
| Example 1 | 60 | 39.1 | C1 | 0.3 | 0.6 |
| Example 2 | 60 | 39 | C1 | 0.4 | 0.6 |
| Example 3 | 60 | 38.9 | C1 | 0.5 | 0.6 |
| Example 4 | 60 | 38.8 | C1 | 0.6 | 0.6 |
| Example 5 | 60 | 38.8 | C2 | 0.6 | 0.6 |
| Example 6 | 60 | 39.1 | C1+C4 | 0.2+0.1 | 0.6 |
| Comparative Example 1 | 60 | 39.4 | None | 0 | 0.6 |
| Comparative Example 2 | 60 | 38.9 | C3 | 0.5 | 0.6 |
| Comparative Example 3 | 60 | 39.25 | C4 | 0.15 | 0.6 |
| Comparative Example 4 | 60 | 39.25 | C5 | 0.15 | 0.6 |

For each sample, the RT stability and HT stability were tested. And each of the samples was subjected to the three-step shear recovery test. The data of initial viscosity in the first step and 10s recovery viscosity in the third step were shown in Table 3. The time-dependent viscosity profiles of Example 3 and Comparative Example 3 were shown in Fig. 1.

**Table 3.**

| | **Stability** | | **Viscosity (Pa·s)** | | **Gloss** | | |
|---|---|---|---|---|---|---|---|
| | 30 day RT | 30 day 50°C | Initial viscosity | 10s recovery viscosity | 20° | 60° | 85° |
| Substrate | / | / | / | / | 63.23 | 93.30 | 98.40 |
| Example 1 | OK | OK | 43.85 | 35.14 | 4.33 | 30.77 | 51.27 |
| Example 2 | OK | OK | 71.30 | 60.63 | 3.33 | 25.97 | 44.13 |
| Example 3 | OK | OK | 122.26 | 103.59 | 2.93 | 22.03 | 34.33 |
| Example 4 | OK | OK | 166.30 | 146.39 | 2.60 | 19.80 | 29.53 |
| Example 5 | OK | OK | 205.29 | 183.03 | 3.53 | 25.70 | 35.13 |
| Example 6 | OK | OK | 118.50 | 38.16 | 5.57 | 36.03 | 53.43 |
| Comparative Example 1 | OK | OK | 5.06 | 0.54 | 29.00 | 74.03 | 92.00 |
| Comparative Example 2 | OK | Failed | 259.51 | 121.71 | 2.80 | 19.90 | 24.70 |
| Comparative Example 3 | OK | OK | 33.20 | 6.04 | 8.10 | 44.0 | 66.30 |
| Comparative Example 4 | OK | OK | 27.25 | 9.74 | 6.5 | 42.0 | 64.03 |

### Coating films and surface gloss

A square ABS plate was used as the substrate. Each of the compositions were sprayed on the ABS substrate at a coating weight of 130 g/m² (expressed as wet amount). Then, the coated ABS substrate was placed in an oven at 50°C for 10 minutes, for drying. After drying, the coated ABS substrate was subjected to the gloss test and the gloss results were shown in Table 2.

From the results shown in Table3, when a w/o inverted emulsion thickener was used in an aqueous composition (Examples 1-6), the prepared aqueous coating compositions had good RT storage stability and HT storage stability. The 10s recovery viscosities of these samples were relatively high with a value greater than 30 Pa·s. The formed coating films showed low gloss effect with 60° gloss values less than 40. With the weight percentage increase of added thickener in the aqueous coating composition, the gloss of the coating film decreased gradually.

In Example 6, a mixed thickener containing a w/o inverted emulsion and an o/w emulsion was used. The corresponding coating composition also achieved good storage stability and low surface gloss.

In Comparative Example 2, the aqueous composition had a high 10s recovery viscosity and the formed coating film showed low gloss. However, it did not pass the HT stability test.

In Comparative Examples 3 and 4, the aqueous compositions had lower 10s recovery viscosity, i.e., less than 30 Pa·s, and the formed coating film showed high gloss.

### Water-based adhesive composition

The aqueous coating compositions of Examples 1-6 in Table 2 were used as water-based adhesive compositions. Each of the compositions were sprayed on an ABS substrate at a coating weight of 100-150 g/m² (expressed as wet amount). The coated ABS substrate was placed in an oven at 50°C for 10 minutes, for drying. Then a PVC foil was then heat-pressed onto the dried coated ABS substrate, at a temperature of 70°C at a nominal pressure of 0.2 MPa which was maintained for 10 seconds.

Laminates thus prepared were submitted to a 180° peel test on an Instron tensile strength tester, with the jaw speed set at 300 mm/min. This test was carried out after allowing the laminates to stand at room temperature after their preparation: 1 minute (to assess initial strength) or 1 day (to assess final strength).

All examples show a 180° peel result after 1 minute which is greater than 15 N/25 mm, which is considered as quite appropriate. Further, the 180° peel result after 1 day is, for all examples, greater than 50 N/25 mm, which corresponds to a very good final strength.

Whereas particular embodiments of this invention have been described above for purposes of illustration, it will be evident to those skilled in the art that numerous variations of the details of the present invention may be made without departing from the invention as defined in the appended claims.

## Claims

1. An aqueous coating composition comprising a mixture of an aqueous polyurethane dispersion (A) and a thickener (C), wherein the thickener (C) comprises at least one water-in-oil inverted emulsion.

2. The aqueous coating composition according to claim 1, **characterized in that** the aqueous coating composition comprises a mixture of, with respect to the total weight of the mixture:
30-99.9wt% of the aqueous polyurethane dispersion (A);
0-69.9wt% of a vinyl-based emulsion (B);
0.1-5wt% of the thickener (C); and
0-5wt% of an additive (D),
wherein the aqueous polyurethane dispersion (A) has a solid content of 45-55wt%, and the aqueous polyurethane dispersion (A) comprises polyurethane-based particles having a D50 particle size of 50-500 nm, preferably 60-400 nm;
wherein the vinyl-based emulsion (B) has a solid content of 45-65wt%, and the vinyl-based emulsion (B) comprises vinyl-based copolymer particles having a D50 particle size of 500-1200 nm, preferably 600-1000 nm; and
wherein the solid contents are measured according to DIN EN ISO 3251, the D50 particle sizes are measured according to DIN ISO 9276.

3. The aqueous coating composition according to claims 1 or 2, **characterized in that** the water-in-oil inverted emulsion is a hydrophobically alkali swellable emulsion comprising at least one anionic acrylic copolymer.

4. The aqueous coating composition according to any one of claims 1 to 3, **characterized in that** the water-in-oil inverted emulsion comprises a continuous phase comprising at least one non-polar organic solvent.

5. The aqueous coating composition according to any one of claims 1 to 4, **characterized in that** the thickener (C) further comprises at least one oil-in-water emulsion.

6. The aqueous coating composition according to any one of claims 1 to 5, **characterized in that** the aqueous coating composition is substantially free of a matting agent.

7. The aqueous coating composition according to any one of claims 1 to 6, **characterized in that** the aqueous coating composition has a 10s recovery viscosity of no less than 30 Pa·s, preferably, in a range of 30-200 Pa·s, the 10s recovery viscosity being a viscosity value after ten seconds of a third interval when the aqueous coating composition is subjected to a three-step shear recovery test at 25°C with shear rates of 0.1 s⁻¹, 1000 s⁻¹ and 0.1 s⁻¹ for each interval respectively.

8. The aqueous coating composition according to any one of claims 1 to 7, **characterized in that** the aqueous coating composition has a Brookfield viscosity change of less than 20% after being stored at 50°C for 30 days.

9. The aqueous coating composition according to any one of claims 1 to 8, **characterized in that** a coating film made from the aqueous coating composition has a 60°gloss of less than 40, preferably less than 35, more preferably in a range of 5-30, wherein the 60° gloss being measured according to ASTM D-523.

10. The aqueous coating composition according to any one of claims 2 to 9, **characterized in that** the vinyl-based emulsion (B) comprises a copolymer of vinyl acetate and ethylene.

11. A coating film formed by the aqueous coating composition according to any one of claims 1 to 10.

12. Use of the aqueous coating composition according to any one of claims 1 to 10 in preparation of or as coatings, adhesives, sealants, inks, paints and building products.

13. A water-based adhesive composition comprising the aqueous coating composition according to any one of claims 1 to 10.

14. An article comprising a substrate and a coating film formed by the aqueous coating composition according to any one of claims 1 to 10.

15. A process for preparing an aqueous coating composition comprising the steps of:
(i) providing an aqueous polyurethane dispersion (A); and
(ii) introducing a thickener (C) into the aqueous polyurethane dispersion (A) under stirring, wherein the thickener (C) comprises at least one water-in-oil inverted emulsion.

16. An aqueous coating composition prepared by the process according to claim 15.

17. A process for preparing an aqueous coating composition comprising the steps of:
(i) mixing an aqueous PUD (A) and a vinyl-based emulsion (B) to obtain a polymer dispersion;
(ii) introducing a thickener (C) into the polymer dispersion still under stirring, wherein the thickener (C) comprises at least one water-in-oil inverted emulsion.

18. An aqueous coating composition prepared by the process according to claim 17.
